# EUROPEAN PATENT APPLICATION

(11) **EP 0 677 409 A1**
(43) Date of publication of application: **18.10.1995**
(21) Application number: 95302287.8
(22) Date of filing: 05.04.1995
(51) Int. Cl.: B60J 7/00

(54) **Sun roofs for vehicles**

(30) Priority: 13.04.1994 GB 9407313
(71) Applicant: JAGUAR CARS LIMITED, Allesley Coventry CV5 9DR (GB)
(72) Inventor: Thomas, Alan Vaughan, Shepshed, Leicestershire LE12 9DH (GB)
(74) Representative: Watts, Peter Graham

(57) **Abstract**

A sun roof (10) for a vehicle is defined by an aperture (16) in the roof (11) of the vehicle, a panel (20) movable between a closed position in which it is disposed in the aperture (16) and an open position in which it is clear of the aperture (16), and a rigid mesh screen (15) is provided to be located in the aperture (16) when the panel (20) is in its open position.

## Description

The present invention relates to sun roofs for vehicles.

Sun roofs for vehicles, when open, produce significant noise levels which increase with the speed of the vehicle. Generally the noise is of a broad band nature due to pressure fluctuations resulting from the shear between the exterior air flow and the stationery air in the vehicle. In addition to this broad band noise, resonant interactions between the sheer layer and the air inside the vehicle creates low frequency pressure fluctuations which produce a booming noise over a critical speed range, which is typically 30 to 70 miles per hour. The effect can range from mild interference to speech to extreme discomfort on the ears. Furthermore, air flow into the vehicle may create unpleasant draughts or buffeting within the vehicle.

Conventionally, wind deflectors are provided along the leading edge of the sun roof aperture, so that they extend above the line of the roof when the sun roof is open, thereby deflecting the air flow away from the sun roof aperture. Wind deflectors of this type significantly reduce the broad band noise and also reduce buffeting of air within the vehicle. Modified wind deflector profiles may also reduce the boom to acceptable levels. Such measures are, however, only partially effective.

According to one aspect of the present invention, a sun roof for a vehicle comprises an aperture in the roof of the vehicle, a panel adapted to be disposed in the aperture to close the aperture, the panel being displaceable to open the aperture characterised in that a rigid mesh screen is adapted to be located in the aperture to replace the panel when it is displaced to open the aperture.

In accordance with the present invention the rigid mesh screen acts as a barrier between the layer of air flowing over the vehicle roof and the air within the vehicle, damping pressure fluctuations and thereby moderating both the broad band and low frequency noises within the vehicle. The mesh panel will also reduce buffeting and draughts within the vehicle while diffusing a flow of air into the vehicle to produce an open air feel.

The mesh screen must be rigid in order to avoid vibration thereof. The screen may be made from a rigid material such as perforated metal or rigid plastics material or may be formed from a flexible material, for example a fabric which is tensioned in a suitable frame member. The porosity of the mesh should be such that it produces significant damping of air vibration, while permitting sufficient diffusion of air into the vehicle to provide the open air feel. Typically, meshes having perforations amounting to 80% to 30% of the surface area may be used. The perforations preferably have a major dimension of less than 5 mm and the edges of the perforations should be smooth.

The mesh screen in accordance with the present invention may be positioned at a level below that of the panel which closes the aperture. However, preferably the mesh panel when in an operative position forms a continuation of the roof line of the vehicle, so as to provide a smooth air flow over the vehicle roof. Means, for example, a resiliently biased linkage mechanism may be provided to locate the mesh screen in an appropriate position, as the panel is displaced to open the sun roof.

An embodiment of the invention is now described, by way of example only, with reference to the accompanying drawings in which:-
Figure 1 is a partial side elevation of a vehicle showing the air flow over the open aperture of a vehicle sun roof;
Figure 2 is a view similar to Figure 1, showing the air flow over a vehicle sun roof fitted with a mesh screen in accordance with the present invention; and
Figure 3 is a diagrammatic illustration in part sectional elevation of a vehicle roof with sun roof in accordance with the present invention.

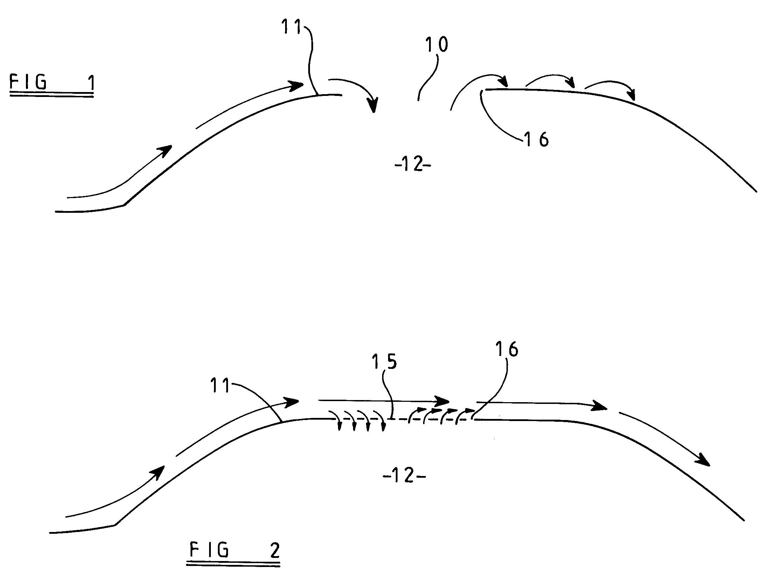

As illustrated in Figure 1, with an open sun roof 10 air flow over the roof 11 of a vehicle is significantly disrupted, air flowing into the passenger compartment 12. The in-flow of air into the passenger compartment 12 will create draughts and buffeting of the occupants of the vehicle and will also create high levels of wind noise.

In accordance with the present invention as illustrated in Figure 2, a mesh screen 15 is located in the sun roof aperture 16. The mesh screen 15 will act as a continuation of the roof 11 maintaining a substantially streamline flow over the vehicle, while permitting controlled exchange of air into and out of the passenger compartment 12. In addition to significantly reducing wind noise, the mesh screen 15 will also avoid draughts and buffeting within the passenger compartment 12.

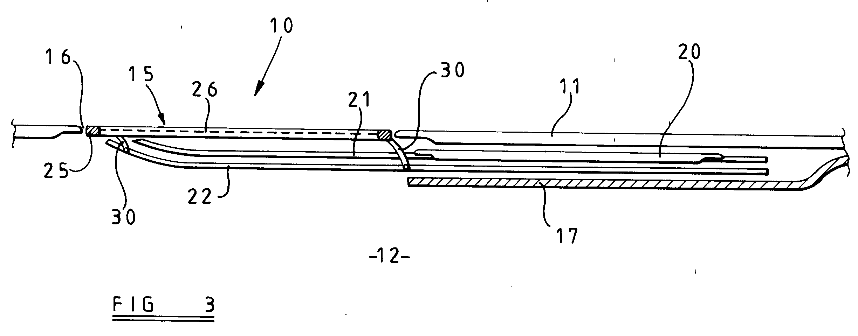

As illustrated in Figure 3, a sun roof for a vehicle comprises an aperture 16 in the roof of the vehicle. A closure panel 20 is located on tracks 21 positioned along the edges of the panel 20 running longitudinally of the vehicle so that the panel may be slid along the tracks from a position in which it closes the aperture 16 to a position in which it is clear of the aperture 16 and is located behind a trim panel 17 forming the interior roof of the vehicle. The panel 20 may be moved between its open and closed positions by manual or power means and may also be provided with an upward motion at its rear edge.

A mesh screen 15 comprising a frame 25 in which a fabric mesh 26 is held under tension. The mesh screen 15 is located in tracks 22 which run parallel to and are positioned below the tracks 21, so that the mesh screen 15 is movable between a position in which it underlies the aperture 16 and a position in which it is clear of the aperture 16. Movement of the mesh screen 15 may be linked to that of the panel 20, so that as the panel 20 is moved from the aperture 16 to open the sun roof, the mesh screen will be moved into the aperture 16; or when the panel 20 is moved to close the aperture 16, the mesh screen 15 will be moved away from the aperture 16 to a stowage position behind the roof trim panel 17.

The mesh screen 15 is located with respect to its tracks 22 by means of resiliently biased links 30, so that when the mesh screen 15 is moved into the aperture 16, the links 30 will toggle the screen 15 into the aperture 16 so that the screen 15 is flush with the roof line of the vehicle. Upon closure of the sun roof, the panel 20 will engage cam formations on the links 30 to toggle the mesh panel 15 down out of the way of the panels 20 as it moves to close the aperture 16.

Various modifications may be made without departing from the invention. For example, while in the above embodiment the mesh panel 15 automatically moves into position as the sun roof is opened, it may alternatively be arranged so that it may be optionally moved into position or the aperture may be left clear, as desired.

In an alternative embodiment, the mesh screen 15 may be located between inner and outer skins of the panel 20, the mesh screen 1 5 being optionally latched to the leading edge of the aperture 16, so that with the mesh screen 15 latched it will automatically be left in the aperture 16 as the panel 20 is withdrawn, whereas if the latch is released, the mesh screen 15 will be withdrawn with the panel 20.

The fabric mesh 26 may be in the form of a knitted or woven material, the fibres of which may be bonded or fused together at the intersection thereof. Alternatively the fabric mesh may be in the form of a punched flexible plastic sheet. The fabric mesh 26 must be capable of maintaining an adequate tension throughout the life of the mesh screen.

Instead of using a flexible fabric mesh 26 which requires a support frame 25, a self supporting mesh screen may be made of a rigid material, for example metal or rigid plastics material. Where perforations are produced by punching or similar means the perforations should be deburred to provide smooth edges. Metal sheets may also be coated with a plastics material.

In addition to reducing wind noise and buffeting within the passenger compartment, the mesh screen of the present invention also provides protection against debris, dirt, leaves and even rain. Furthermore, the mesh screen will also act to reduce glare. When a rigid mesh screen is used, it will also act as a security screen, so that the sun roof may be left open while the vehicle is unattended.

Sealing means which may be in the form of an extended rubber profile, may be incorporated around the edges of the screen to provide a seal with the periphery of the sun roof aperture. In particular where the mesh screen is located below the level of the roof sealing means should be provided to seal off any gap between the main roof panel and the mesh panel. This may be achieved by a movable/flexible rubber seal or a brush seal.

In a further alternative embodiment, the mesh screen may be a separate component supplied independently for fitment to the sun roof aperture and secured thereto while in use by, for example, screw or lever clamping system, tongues and springs or a combination thereof. Such a device may be adapted to fit in the aperture of a sliding sunroof or in the aperture of a tilt and take out type sun roof. In the latter case the clamping system for the sun roof panel may locate the mesh screen.

## Claims

1. A sun roof (10) for a vehicle comprising an aperture (16) in the roof (11) of the vehicle, a panel (20) adapted to be disposed in the aperture (16) to close the aperture (16), the panel (20) being displaceable to open the aperture (16) characterised in that a rigid mesh screen (15) is adapted to be located in the aperture (16) to replace the panel (20) when it is displaced to open the aperture (16).

2. A sun roof (10) according to Claim 1 characterised in that the mesh screen (15) is formed from a perforated rigid material.

3. A sun roof (10) according to Claim 1 characterised in that the mesh screen (15) is formed from a flexible mesh material (26) which is held under tension in a supporting frame (25).

4. A sun roof (10) according to any one of the preceding claims characterised in that the area of the perforations in the mesh is from 80% to 30% of the total area.

5. A sun roof (10) according to any one of Claims 1 to 4 characterised in that the mesh has perforations with a major dimension less than 5 mm.

6. A sun roof (10) according to any one of the preceding claims characterised in that, in its operative position, the mesh screen (15) is located in the aperture (16) so that it forms a continuation of the roof line of the vehicle.

7. A sun roof (10) according to any one of the preceding claims characterised in that the closure panel (20) is located in tracks (21) for movement longitudinally of the vehicle, the mesh screen (15) being located in tracks (22) positioned parallel to and below those of the closure panel (20), means being provided to move the mesh panel (15) from a stowed position to an operative position as the closure panel (20) is moved from a position in which it closes the aperture (16) to a stored position and vice versa.

8. A sun roof (10) according to Claim 6 or 7 characterised in that means (30) is provided to toggle the mesh screen (15) up into the aperture (16), when the sun roof (10) is open.

9. A sun roof (10) according to Claim 8 characterised in that the mesh screen (15) is located by links (30), means being provided to toggle the mesh screen (15) into the aperture (16) when the sun roof (10) is open.

10. A sun roof (10) according to Claim 9 characterised in that the links (30) are resiliently biased to toggle the mesh screen (15) into the aperture (16), when the sun roof (10) is open.

11. A sun roof (10) according to Claim 10 characterised in that the closure panel (20) engages cam formations on the links (30) to toggle the mesh screen (15) down out of the aperture (16), when the closure panel (20) is moved from its stored position to close the sun roof (10).

12. A sun roof (10) according to any one of the preceding claims characterised in that the closure panel (20) and mesh screen (15) are linked so that as the closure panel (20) is withdrawn to open the sun roof (10), the mesh panel (15) is automatically moved to a position in which it is located in the aperture (16).

13. A sun roof (10) according to any one of Claims 1 to 11 characterised in that the mesh panel (15) is optionally disposed within the aperture (16) when the sun roof (10) is open.
